# EUROPEAN PATENT SPECIFICATION

(11) **EP 4 234 195 B1**
(45) Date of publication and mention of the grant of the patent: **31.12.2025**
(21) Application number: 21883182.4
(22) Date of filing: 19.10.2021
(51) Int. Cl.: B29C 43/36, H01M 50/116, B65B 47/04, B29C 43/02, B29C 43/04, B29C 43/32, B29L 31/00, B21D 5/02, B21D 22/02, B21D 22/22, B21D 22/26, B21D 24/04

(54) **APPARATUS FOR MANUFACTURING SECONDARY BATTERY POUCH**
VORRICHTUNG ZUR HERSTELLUNG EINES SEKUNDÄRBATTERIEBEUTELS
APPAREIL POUR LA FABRICATION D'UNE POCHE DE BATTERIE SECONDAIRE

(30) Priority: 23.10.2020 KR 20200138674
(43) Date of publication of application: 30.08.2023
(73) Proprietor: LG Energy Solution, Ltd., Seoul 07335 (KR)
(72) Inventor: OH, Se Young, Daejeon 34122 (KR); KIM, Geun Hee, Daejeon 34122 (KR); LEE, Chung Hee, Daejeon 34122 (KR); KIM, Hyun Beom, Daejeon 34122 (KR); KWON, Hyung Ho, Daejeon 34122 (KR); HA, Jeong Min, Daejeon 34122 (KR)
(74) Representative: Goddar, Heinz J.
(86) International application number: PCT/KR2021/014558
(87) International publication number: WO 2022/086113

(56) References cited:
- WO-A1-2019/045447
- CN-A- 106 944 545
- JP-A- 2002 178 096
- JP-A- S57 134 219
- KR-A- 20140 019 933
- KR-A- 20150 087 730
- KR-A- 20190 105 765
- KR-A- 20200 117 177
- US-B2- 7 749 648

## Description

### TECHNICAL FIELD

The present invention relates to an apparatus for manufacturing a pouch of a secondary battery, and more particularly, to an apparatus for manufacturing a pouch of a secondary battery, which is capable of relieving or removing pouch wrinkles occurring when a pouch base material is non-uniformly suctioned during molding of the pouch without an additional device.

### BACKGROUND ART

WO 2019/045447 A1 relates to a secondary battery and a manufacturing method thereof, and a pressurizing block for manufacturing a secondary battery.
CN 106 944 545 A belongs to the field of stamping extension component forming, and relates to a method for controlling different friction coefficients of a molding surface, which can be applied to all required stamping extension forming processes. US 7 749 648 B2 relates to a secondary battery, and more particularly, to a pouch for containing a secondary battery, to a secondary battery using the pouch, and to an apparatus for sealing the pouch.
JP S57 134219 A relates to a clamping device for press die for stretching.
KR 2019 0105765 A, which forms the basis for the preamble of claim 1, relates to a pouch manufacturing device and method, and a secondary battery manufacturing method.
KR 2015 0087730 A relates to a rear impact extrusion device for manufacturing a secondary battery case and a method for manufacturing a secondary battery case using the same.

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases.

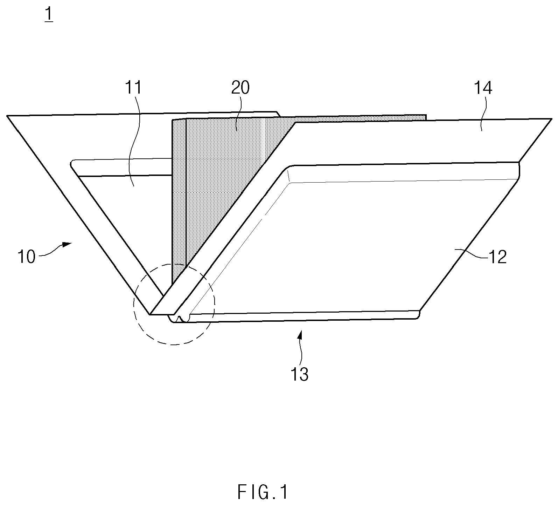

FIG. 1 illustrates an example of a pouch-type secondary battery. A pouch-type secondary battery 1 includes an electrode assembly 20, in which electrodes and separators are alternately stacked, and a pouch 10, into which the electrode assembly is inserted. In addition, the pouch includes cup parts 11 and 12 of the pouch, each of which has a recessed shape so that the electrode assembly is directly accommodated. The cup parts of the pouch are provided with the cup part 11 of a left pouch and the cup part 12 of a right pouch to surround the electrode assembly at both sides. A peripheral portion 14 of the pouch is formed around the periphery of each of the cup parts of the pouch to seal the pouch from the outside.

Particularly, the pouch illustrated in FIG. 1 may be a V-shaped pouch 10. According to the related art, the pouch has been manufactured in a flat form. However, in recent, the pouch may be manufactured as a V-shaped pouch so that the pouch is neatly manufactured to prevent a protrusion from occurring on an outer appearance of the pouch during a pouch folding process. In addition, such a V-shaped pouch may be manufactured through an apparatus for manufacturing the pouch, which is formed as a molding die.

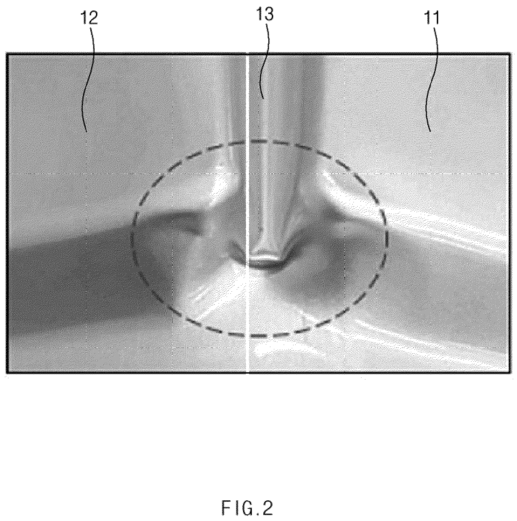

However, when the pouch is molded using the molding die for manufacturing the V-shaped pouch, there is a problem in that pouch wrinkles occurs due to the pouch base material being suctioned non-uniformly at a specific position. FIG. 2 is a view illustrating a state in which pouch wrinkles occur between the cup part 11 of the left pouch and the cup part 12 of the right pouch. Particularly, as illustrated in FIG. 2, there is a problem in that the pouch wrinkles occur at an end of a pouch bridge part 13 (see dotted lines in FIGS. 1 and 2).

### DISCLOSURE OF THE INVENTION

### TECHNICAL PROBLEM

The present invention has been devised to solve the above problems, and an object of the present invention is to provide an apparatus for manufacturing a pouch of a secondary battery, which is capable of relieving or removing pouch wrinkles occurring when a pouch base material is non-uniformly suctioned during molding of the pouch without an additional device.

### TECHNICAL SOLUTION

An apparatus for manufacturing a pouch of a secondary battery according to the present invention includes: a lower die, in which an accommodation groove for molding a cup part of the pouch is formed in a base surface, on which the pouch is disposed; a punch inserted into the accommodation groove of the lower die to mold the cup part of the pouch; and a stripper provided to press a peripheral portion of the pouch, which is disposed in the periphery of a portion to be molded into the cup part of the pouch by the punch, wherein the stripper and the lower die press and grip upper and lower portions of a peripheral portion of the pouch, respectively, in the state in which the peripheral portion of the pouch is gripped by the stripper and the lower die, the punch is inserted into the accommodation groove to mold the cup part of the pouch, and a friction area, which is an area having surface roughness greater than that of the peripheral portion, is formed on a pressing surface of the lower die or the stripper, which presses the peripheral portion of the pouch.

The friction area may include a first friction area formed on the lower die.

Two accommodation grooves, i.e., a left accommodation groove and a right accommodation groove may be formed in the lower die,
a bridge part configured to the two accommodation grooves to each other may be formed between the left accommodation groove to the right accommodation groove, and
the first friction area may be formed on a bridge part outer area that is an area disposed outside the bridge part on the base surface.

The first friction area may be formed to be spaced a predetermined distance from each of both ends of the bridge part.

The first friction area may be formed to be spaced a distance of 5 mm or more from each of both the ends of the bridge part.

The friction area may include a second friction area formed on the stripper.

Two accommodation grooves, i.e., a left accommodation groove and a right accommodation groove may be formed in the lower die,
a bridge part configured to the two accommodation grooves to each other may be formed between the left accommodation groove to the right accommodation groove, and
the second friction area may be formed on a stripper outer area that is the pressing surface of the stripper, which faces a bridge part outer area that is an area disposed outside the bridge part on the base surface.

The second friction area may be formed to be spaced a predetermined distance from a point of the stripper, which corresponds to each of both the ends of the bridge part.

The second friction area may be formed to be spaced a distance of 5 mm or more from the point of the stripper, which corresponds to each of both the ends of the bridge part.

The friction the friction area may include a first friction area formed on the lower die and a second friction area formed on the stripper.

Two accommodation grooves, i.e., a left accommodation groove and a right accommodation groove may be formed in the lower die,
a bridge part configured to the two accommodation grooves to each other may be formed between the left accommodation groove to the right accommodation groove, and
the first friction area may be formed on a bridge part outer area that is an area disposed outside the bridge part on the base surface, and the second friction area may be formed on a stripper outer area that is the pressing surface of the stripper, which faces the bridge part outer area that is the area disposed outside the bridge part on the base surface.

The first friction area may be formed to be spaced a predetermined distance from each of both ends of the bridge part, and the second friction area may be formed to be spaced a predetermined distance from a point of the stripper, which corresponds to each of both the ends of the bridge part.

The first friction area may be formed to be spaced a distance of 5 mm or more from each of both the ends of the bridge part, and the second friction area may be formed to be spaced a distance of 5 mm or more from the point of the stripper, which corresponds to each of both the ends of the bridge part.

A pressure applied to the peripheral portion of the pouch by the stripper and the lower die on the friction area may be greater 10% to 30% than a reference pressure that is a pressure applied to the peripheral portion of the pouch other than the friction area.

The reference pressure may be 0.3 bars to 0.35 bars.

### ADVANTAGEOUS EFFECTS

An apparatus for manufacturing a pouch of a secondary battery according to the present invention includes: a lower die, in which an accommodation groove for molding a cup part of the pouch is formed in a base surface, on which the pouch is disposed; a punch inserted into the accommodation groove of the lower die to mold the cup part of the pouch; and a stripper provided to press a peripheral portion of the pouch, which is disposed in the periphery of a portion to be molded into the cup part of the pouch by the punch, wherein the stripper and the die press and grip upper and lower portions of a peripheral portion of the pouch, respectively, in the state in which the peripheral portion of the pouch is gripped by the stripper and the lower die, the punch is inserted into the accommodation groove to mold the cup part of the pouch, and a friction area, which is an area having surface roughness greater than that of the peripheral portion, is formed on a pressing surface of the lower die or the stripper, which presses the peripheral portion of the pouch, and thus, pouch wrinkles occurring by being non-uniformly suctioned when the pouch is molded may be relieved or removed without an additional device.

### BRIEF DESCRIPTION OF THE DRAWINGS

FIG. 1 is an exploded perspective view of a V-shaped pouch and an electrode assembly, which is embedded in the V-shaped pouch.
FIG. 2 is a perspective view illustrating a shape of a portion indicated by a dotted line of FIG. 1 when viewed from below.
FIG. 3 is a front view illustrating an apparatus for manufacturing a pouch of a secondary battery, i.e., a state in which a punch and a stripper are far away from a lower die before molding of the pouch according to the present invention.
FIG. 4 is a front view illustrating the apparatus for manufacturing the pouch of the secondary battery, i.e., a state in which the punch and the stripper are close to the lower die to mold the pouch according to the present invention.
FIG. 5 is front and plan views of a lower die in an apparatus for manufacturing a pouch of a secondary battery according to Embodiment 1 of the present invention.
FIG. 6 is front and bottom views of a stripper and a punch in an apparatus for manufacturing a pouch of a secondary battery according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

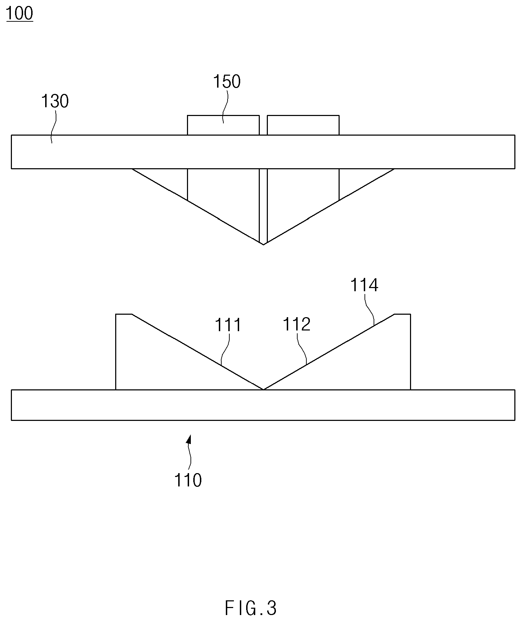

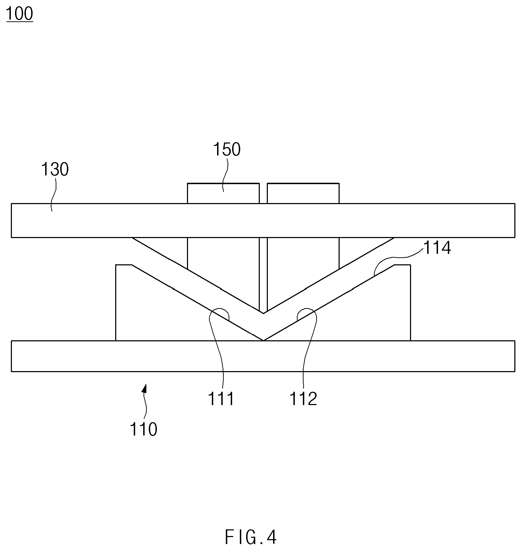

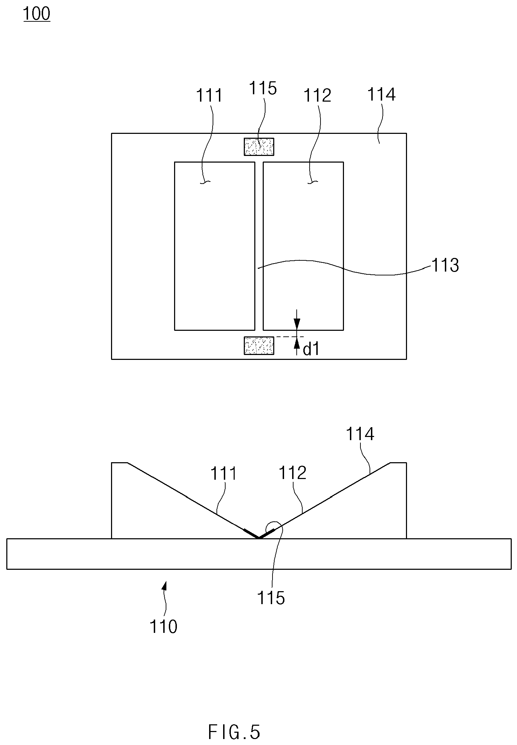

FIG. 3 is a front view illustrating an apparatus for manufacturing a pouch of a secondary battery, i.e., a state in which a punch and a stripper are far away from a lower die before molding of the pouch according to the present invention. FIG. 4 is a front view illustrating the apparatus for manufacturing the pouch of the secondary battery, i.e., a state in which the punch and the stripper are close to the lower die to mold the pouch according to the present invention. FIG. 5 is front and plan views of a lower die in an apparatus for manufacturing a pouch of a secondary battery according to Embodiment 1 of the present invention. In FIG. 5, an upper drawing is a plan view (a base surface when viewed from above), and a lower drawing is a front view.

Referring to FIGS. 3 to 5, an apparatus 100 for manufacturing a pouch of a secondary battery according to Embodiment 1 of the present invention includes a lower die 110, a punch 150, and a stripper 130.

The lower die 110 may be positioned below to mold the pouch and may have a base surface 114, on which the pouch is disposed, on an upper portion thereof. In addition, the lower die 110 has accommodation grooves 111 and 112 for molding a cup part of the pouch on the base surface 114 on which the pouch is disposed. The punch 150 may be configured to mold the cup part of the pouch while being inserted into the accommodation grooves of the lower die 110. The stripper 130 may be configured to press a peripheral portion of the pouch, which is disposed in the periphery of a portion to be molded into the cup part of the pouch, from an upper side by the punch 150.

The stripper 130 and the lower die 110 may press and grip upper and lower portion of the peripheral portion of the pouch, respectively, and in the state in which the peripheral portion of the pouch is gripped by the stripper 130 and the lower die 110, the punch 150 may be inserted into the accommodation grooves to mold the cup part of the pouch.

In the apparatus 100 for manufacturing the pouch of the secondary battery according to Embodiment 1 of the present invention, a friction area, which is an area having surface roughness greater than that of the peripheral portion, may be formed on a pressing surface of the lower die 110 or the stripper 130, which presses the peripheral portion of the pouch.

In this embodiment, the friction area may mean an area having surface rougher roughness than other areas. The lower die 110 may be made of a metal, and in this case, the friction area may mean a rough metal surface. For example, the base surface 114 of the lower die 110 may be polished to be smooth, but only the friction area may not be subjected to the polishing so that the friction area remains as a rougher surface than other areas to form the friction area.

According to the related art, in order to partially increase in gripping pressure at a specific portion, a method for inserting a filler or inserting a spring has been used. However, this method has a problem in inconvenience of providing an additional mechanism, and accumulated use of inserting of the additional mechanism.

On the other hand, the method for forming the friction area on the metal die of the present invention may have the advantage that an additional mechanism such as the filler is not required. In addition, since the method, in which the additional mechanism is not inserted is used, it has an advantage that deformation of the metal (metal die) does not occur.

The V-shaped pouch of the secondary battery may be manufactured through the apparatus 100 for manufacturing the pouch of the secondary battery according to Embodiment 1 of the present invention, which has the above-described configuration.

Referring to FIG. 5, the friction area may include a first friction area 115 formed on the lower die 110. In the apparatus 100 for manufacturing the pouch of the secondary battery according to Embodiment 1 of the present invention, the friction area may be formed only on the lower die 110, and also, the friction area may not be formed on the upper stripper 130. In this case, the friction area formed on the lower die may be the first friction area 115.

Two accommodation grooves, i.e., a left accommodation groove 111 and a right accommodation groove 112 may be formed in the lower die 110. The cup part of the left pouch may be formed through the left accommodation groove 111, and the cup part of the right pouch may be formed through the right accommodation groove 112.

A bridge part 113 connecting the two accommodation grooves to each other may be formed between the left accommodation groove 111 and the right accommodation groove 112. In addition, the first friction area 115 may be formed on an area outside the bridge part 113, which is an area disposed outside the bridge part 113 on the base surface 114. FIG. 5 illustrates a state, in which the first friction area 115 is formed on an area outside the upper bridge part 113 and an area outside the lower bridge part 113.

In the apparatus 100 for manufacturing the pouch of the secondary battery according to Embodiment 1 of the present invention, the pouch wrinkles occurring when the pouch base material is non-uniformly suctioned during the molding of the pouch may be relieved or removed without an additional device.

That is, according to the related art, when the roughness on the base surface 114 of the lower die 110 is formed to be the same, a relatively more amount of pouch base material may be suctioned at the end of the bridge part 113 to cause the pouch wrinkles. However, the apparatus 100 for manufacturing the pouch of the secondary battery according to Embodiment 1 of the present invention may have the friction area at a specific area to prevent the pouch from being suctioned into the bridge part 113 so as to be suctioned only as much as necessary, thereby preventing the pouch wrinkles from occurring.

When the pouch is molded while the punch 150 is accommodated in the accommodation grooves, the pouch base material may be suctioned by a predetermined amount as a whole during the molding of the pouch, but a relatively more amount of pouch base material may be suctioned at the end of the bridge part 113 to cause the pouch wrinkles. However, in the apparatus for manufacturing the pouch of the secondary battery according to Embodiment 1 of the present invention, those cause and problem may be solved.

In the apparatus 100 for manufacturing the pouch of the secondary battery according to Embodiment 1 of the present invention, the first friction area 115 may be formed to be spaced a predetermined distance from each of both ends of the bridge part 113. Particularly, the first friction area 115 may be formed to be spaced a distance of 5 mm or more from each of both the ends of the bridge part 113. That is, a value d1 in FIG. 5 may be 5 mm or more.

When the value d1, which is the separation distance between the first friction area 115 from each of both the ends of the bridge part 113, is less than 5 mm, the amount of pouch base material, which is capable of being pushed inward, may be insufficient, and thus, the pouch may be broken at the corresponding portion. As a result, a numerical value that is capable of solving all these problems may correspond to a case in which the value d1 is 5 mm or more.

Also, a pressure applied by the stripper 130 and the lower die 110 to the pouch (accurately, the peripheral portion of the pouch) on the first friction area 115 may be a pressure that is greater 10% to 30% than a pressure applied to the pouch (accurately, the peripheral portion of the pouch) by the stripper 130 and the lower die 110 on an area other than the first friction area 115.

Here, if the pressure applied to the pouch by the stripper 130 and the lower die 110 on the area other than the first friction area 115 is referred to as a reference pressure, the reference pressure may be 0.3 bars to 0.35 bars.

In this case, the pressure applied to the pouch by the stripper 130 and the lower die 110 on the first friction area 115 may be 0.33 bars to 0.39 bars when the reference pressure is 0.3 bars.

In addition, when the reference pressure is 0.35 bars, the pressure applied to the pouch by the stripper 130 and the lower die 110 on the first friction area 115 may be 0.385 bars to 0.455 bars.

### Embodiment 2

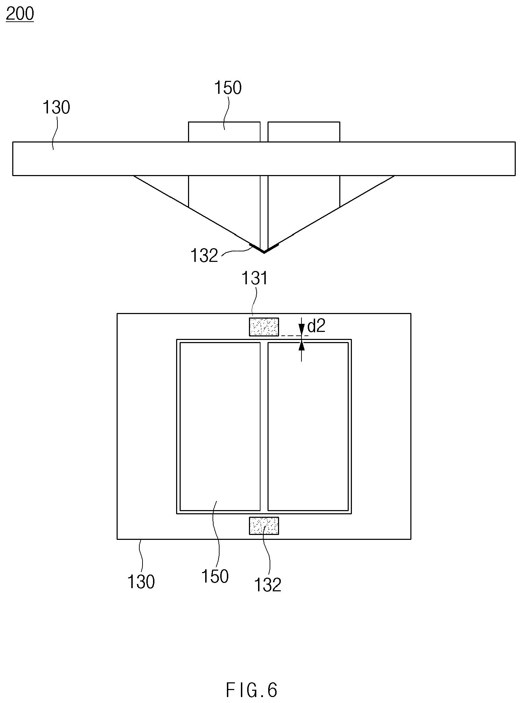

FIG. 6 is front and bottom views of a stripper 130 and a punch 150 in an apparatus for manufacturing a pouch of a secondary battery according to Embodiment 2 of the present invention (an upper drawing is a front view, and a lower drawing is a bottom view).

Embodiment 2 of the present invention is different from Embodiment 1 in that a friction area is formed on the stripper 130 disposed at an upper side.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 6, in an apparatus 200 for manufacturing a pouch of a secondary battery according to Embodiment 2 of the present invention, the friction area may be formed on the stripper 130. The friction area formed on the stripper 130 may be a second friction area 132.

Like Embodiment 1, two accommodation grooves, i.e., a left accommodation groove 111 and a right accommodation groove 112 may be formed in the lower die 110, and a bridge part 113 connecting the two accommodation grooves to each other are may be formed between the left accommodation groove 111 and the right accommodation groove 112.

The second friction area 132 may be formed on a stripper outer area 131 that is a pressing surface of the stripper 130, which faces an outer area of the bridge part 113 that is an area disposed outside the bridge part 113 on the base surface 114. That is, the stripper outer area 131 may be an area facing the area outside the bridge part 113, and the areas outside the stripper outer area 131 and the bridge part 113 may grip upper and lower portions of the pouch (accurately, the peripheral portion of the pouch).

Also, in the apparatus 200 for manufacturing the pouch of the secondary battery according to Embodiment 2 of the present invention, the second friction area 132 may be formed to be spaced a predetermined distance from a point of the stripper 130, which corresponds to each of both ends of the bridge part 113. Particularly, the second friction area 132 may be formed to be spaced a distance of 5 mm or more from the point of the stripper 130, which corresponds to each of both the ends of the bridge part 113. That is, a value d2 in FIG. 6 may be 5 mm or more.

When the value d2, which is the separation distance between the second friction area 132 from the point of the stripper 130, which corresponds to each of both the ends of the bridge part 113, is less than 5 mm, the amount of pouch base material, which is capable of being pushed inward, may be insufficient, and thus, the pouch may be broken at the corresponding portion. As a result, a numerical value that is capable of solving all these problems may correspond to a case in which the value d2 is 5 mm or more.

Also, a pressure applied by the stripper 130 and the lower die 110 to a peripheral portion of the pouch on the second friction area 132 may be a pressure that is greater 10% to 30% than a pressure applied to the peripheral portion of the pouch by the stripper 130 and the lower die 110 on an area other than the second friction area 132.

Here, if the pressure applied to the pouch by the stripper 130 and the lower die 110 on the area other than the second friction area 132 is referred to as a reference pressure, the reference pressure may be 0.3 bars to 0.35 bars.

In this case, the pressure applied to the pouch by the stripper 130 and the lower die 110 on the second friction area 132 may be 0.33 bars to 0.39 bars when the reference pressure is 0.3 bars.

In addition, when the reference pressure is 0.35 bars, the pressure applied to the pouch by the stripper 130 and the lower die 110 on the second friction area 132 may be 0.385 bars to 0.455 bars.

### Embodiment 3

Embodiment 3 of the present invention is different from Embodiments 1 and 2 in that a friction area is formed on each of both a lower die 110 and a stripper 130.

The contents that are duplicated with Embodiments 1 and 2 will be omitted as much as possible, and Embodiment 3 will be described with a focus on the differences. That is, it is obvious that the contents that are not described in Embodiment 3 may be regarded as the contents of Embodiments 1 and 2 if necessary.

Referring to FIGS. 5 and 6, in an apparatus for manufacturing a pouch of a secondary battery according to Embodiment 3 of the present invention, a friction area may be formed on each of both the lower die 110 and the stripper 130. That is, the apparatus for manufacturing the pouch of the secondary battery according to Embodiment 3 of the present invention may include a lower die 110 illustrated in FIG. 5 and a stripper 130 and a punch 150, which are illustrated in FIG. 6.

Specifically, the friction area may include a first friction area 115 formed on the lower die 110 and a second friction area 132 formed on the stripper 130.

The first friction area 115 may be formed on an area outside the bridge part 113, which is an area disposed outside a bridge part 113 on the base surface 114, and the second friction area 132 may be formed on a stripper outer area 131 that is a pressing surface of the stripper 130, which faces the area outside the bridge part113 on the base surface 114.

The first friction area 115 may be formed to be spaced a predetermined distance from both each of ends of the bridge part 113, and the second friction area 132 may be spaced a predetermined distance from a point of the stripper 130, which corresponds to both the ends of the bridge part 113.

Particularly, the first friction area 115 may be formed to be spaced a distance of 5 mm or more from both each of ends of the bridge part 113, and the second friction area 132 may be spaced a distance of 5 mm or more from a point of the stripper 130, which corresponds to both the ends of the bridge part 113.

Also, a pressure applied by the stripper 130 and the lower die 110 to a peripheral portion of the pouch on the friction area may be a pressure that is greater 10% to 30% than a pressure applied to the peripheral portion of the pouch by the stripper 130 and the lower die 110 on an area other than the friction area.

Here, if the pressure applied to the pouch by the stripper 130 and the lower die 110 on the area other than the friction area is referred to as a reference pressure, the reference pressure may be 0.3 bars to 0.35 bars.

In this case, the pressure applied to the pouch by the stripper 130 and the lower die 110 on the friction area may be 0.33 bars to 0.39 bars when the reference pressure is 0.3 bars.

In addition, when the reference pressure is 0.35 bars, the pressure applied to the pouch by the stripper 130 and the lower die 110 on the friction area may be 0.385 bars to 0.455 bars.

### [Description of the Symbols]

1: Secondary battery
10: Pouch
11: Cup part of left pouch
12: Cup part of right pouch
13: Pouch bridge part
14: Peripheral portion of pouch
100, 200: Apparatus for manufacturing pouch of secondary battery
110: Lower die
111: Left accommodation groove
112: Right accommodation groove
113: Bridge part
114: Base surface
115: First friction area
130: Stripper
131: Stripper outer area
132: Second friction area
150: Punch

## Claims

1. An apparatus (100, 200) for manufacturing a pouch (10) of a secondary battery (1), the apparatus (100, 200) comprising:
a lower die, in which an accommodation groove for molding a cup part (11, 12) of the pouch (10) is formed in a base surface (114), on which the pouch (10) is disposed;
a punch (150) inserted into the accommodation groove of the lower die to mold the cup part (11, 12) of the pouch (10); and
a stripper (130) provided to press a peripheral portion (14) of the pouch (10), which is disposed in the periphery of a portion to be molded into the cup part (11, 12) of the pouch (10) by the punch (150),
wherein the stripper (130) and the lower die are configured to press and grip upper and lower portions of a peripheral portion (14) of the pouch (10), respectively, and
in the state in which the peripheral portion (14) of the pouch (10) is gripped by the stripper (130) and the lower die, the punch (150) is configured to be inserted into the accommodation groove to mold the cup part (11, 12) of the pouch (10),
**characterized in that**
a friction area, which is an area having surface roughness greater than that of the peripheral portion (14), is formed on a pressing surface of the lower die or the stripper (130), which presses the peripheral portion (14) of the pouch (10).

2. The apparatus (100, 200) of claim 1, wherein the friction area comprises a first friction area (115) formed on the lower die.

3. The apparatus (100, 200) of claim 2, wherein two accommodation grooves, i.e., a left accommodation groove (111) and a right accommodation groove (112) are formed in the lower die,
a bridge part (13, 113) connecting the two accommodation grooves to each other is formed between the left accommodation groove (111) to the right accommodation groove (112), and
the first friction area (115) is formed on a bridge part (13, 113) outer area that is an area disposed outside the bridge part (13, 113) on the base surface (114).

4. The apparatus (100, 200) of claim 3, wherein the first friction area (115) is formed to be spaced a predetermined distance from each of both ends of the bridge part (13, 113).

5. The apparatus (100, 200) of claim 4, wherein the first friction area (115) is formed to be spaced a distance of 5 mm or more from each of both the ends of the bridge part (13, 113).

6. The apparatus (100, 200) of claim 1, wherein the friction area comprises a second friction area (132) formed on the stripper (130).

7. The apparatus (100, 200) of claim 6, wherein two accommodation grooves, i.e., a left accommodation groove (111) and a right accommodation groove (112) are formed in the lower die,
a bridge part (13, 113) configured to the two accommodation grooves to each other is formed between the left accommodation groove (111) to the right accommodation groove (112), and
the second friction area (132) is formed on a stripper outer area (131) that is the pressing surface of the stripper (130), which faces a bridge part (13, 113) outer area that is an area disposed outside the bridge part (13, 113) on the base surface (114).

8. The apparatus (100, 200) of claim 7, wherein the second friction area (132) is formed to be spaced a predetermined distance from a point of the stripper (130), which corresponds to each of both the ends of the bridge part (13, 113).

9. The apparatus (100, 200) of claim 8, wherein the second friction area (132) is formed to be spaced a distance of 5 mm or more from the point of the stripper (130), which corresponds to each of both the ends of the bridge part (13, 113).

10. The apparatus (100, 200) of claim 1, wherein the friction area comprises a first friction area (115) formed on the lower die and a second friction area (132) formed on the stripper (130).

11. The apparatus (100, 200) of claim 10, wherein two accommodation grooves, i.e., a left accommodation groove (111) and a right accommodation groove (112) are formed in the lower die,
a bridge part (13, 113) configured to the two accommodation grooves to each other is formed between the left accommodation groove (111) to the right accommodation groove (112),
the first friction area (115) is formed on a bridge part (13, 113) outer area that is an area disposed outside the bridge part (13, 113) on the base surface (114), and
the second friction area (132) is formed on a stripper outer area (131) that is the pressing surface of the stripper (130), which faces the bridge part (13, 113) outer area that is the area disposed outside the bridge part (13, 113) on the base surface (114).

12. The apparatus (100, 200) of claim 11, wherein the first friction area (115) is formed to be spaced a predetermined distance from each of both ends of the bridge part (13, 113), and
the second friction area (132) is formed to be spaced a predetermined distance from a point of the stripper (130), which corresponds to each of both the ends of the bridge part (13, 113).

13. The apparatus (100, 200) of claim 12, wherein the first friction area (115) is formed to be spaced a distance of 5 mm or more from each of both the ends of the bridge part (13, 113), and
the second friction area (132) is formed to be spaced a distance of 5 mm or more from the point of the stripper (130), which corresponds to each of both the ends of the bridge part (13, 113).

## Patentansprüche

1. Vorrichtung (100, 200) zum Herstellen eines Pouch (10) einer Sekundärbatterie (1), wobei die Vorrichtung (100, 200) aufweist:
eine untere Form, in der eine Aufnahmenut zum Formen eines Schalenteils (11, 12) des Pouch (10) in einer Basisfläche (114) ausgebildet ist, auf der der Pouch (10) angeordnet ist;
einen Stempel (150), der in die Aufnahmenut der unteren Form eingesetzt ist, um das Schalenteil (11, 12) des Pouch (10) zu formen; und
einen Abstreifer (130), der bereitgestellt ist, um einen Umfangsabschnitt (14) des Pouch (10) zu drücken, der in dem Umfang eines Abschnitts angeordnet ist, welcher durch den Stempel (150) in das Schalenteil (11, 12) des Pouch (10) zu formen ist,
wobei der Abstreifer (130) und die untere Form konfiguriert sind, um einen oberen Abschnitt und einen unteren Abschnitt eines Umfangsabschnitts (14) des Pouch (10) zu drücken und zu greifen, und
in dem Zustand, in dem der Umfangsabschnitt (14) des Pouch (10) durch den Abstreifer (130) und die untere Form gegriffen ist, der Stempel (150) eingerichtet ist, in die Aufnahmenut eingesetzt zu werden, um das Schalenteil (11, 12) des Pouch (10) zu formen,
**dadurch gekennzeichnet, dass**
ein Reibungsbereich, der ein Bereich mit einer Oberflächenrauheit ist, die größer als die des Umfangsabschnitts (14) ist, auf einer Druckfläche der unteren Form oder des Abstreifers (130) ausgebildet ist, der den Umfangsabschnitt (14) des Pouch (10) drückt.

2. Vorrichtung (100, 200) nach Anspruch 1, wobei der Reibungsbereich einen ersten Reibungsbereich (115) aufweist, der auf der unteren Form ausgebildet ist.

3. Vorrichtung (100, 200) nach Anspruch 2, wobei zwei Aufnahmenuten, d. h. eine linke Aufnahmenut (111) und eine rechte Aufnahmenut (112), in der unteren Form ausgebildet sind,
ein Brückenteil (13, 113), das die zwei Aufnahmenuten miteinander verbindet, zwischen der linken Aufnahmenut (111) und der rechten Aufnahmenut (112) ausgebildet ist, und
der erste Reibungsbereich (115) auf einem äußeren Bereich des Brückenteils (13, 113) ausgebildet ist, der ein Bereich ist, der außerhalb des Brückenteils (13, 113) auf der Basisfläche (114) angeordnet ist.

4. Vorrichtung (100, 200) nach Anspruch 3, wobei der erste Reibungsbereich (115) ausgebildet ist, um einen vorbestimmten Abstand von jedem der beiden Enden des Brückenteils (13, 113) beabstandet zu sein.

5. Vorrichtung (100, 200) nach Anspruch 4, wobei der erste Reibungsbereich (115) ausgebildet ist, um einen Abstand von 5 mm oder mehr von jedem der beiden Enden des Brückenteils (13, 113) beabstandet zu sein.

6. Vorrichtung (100, 200) nach Anspruch 1, wobei der Reibungsbereich einen zweiten Reibungsbereich (132) aufweist, der auf dem Abstreifer (130) ausgebildet ist.

7. Vorrichtung (100, 200) nach Anspruch 6, wobei zwei Aufnahmenuten, d. h. eine linke Aufnahmenut (111) und eine rechte Aufnahmenut (112), in der unteren Form ausgebildet sind,
ein Brückenteil (13, 113), das eingerichtet ist, die zwei Aufnahmenuten miteinander zu verbinden, zwischen der linken Aufnahmenut (111) und der rechten Aufnahmenut (112) ausgebildet ist, und
der zweite Reibungsbereich (132) auf einem äußeren Bereich des Abstreifers (131) ausgebildet ist, der die Druckfläche des Abstreifers (130) ist, der einem äußeren Bereich des Brückenteils (13, 113) zugewandt ist, der ein Bereich ist, der außerhalb des Brückenteils (13, 113) auf der Basisfläche (114) angeordnet ist.

8. Vorrichtung (100, 200) nach Anspruch 7, wobei der zweite Reibungsbereich (132) ausgebildet ist, um einen vorbestimmten Abstand von einem Punkt des Abstreifers (130) beabstandet zu sein, der jedem der beiden Enden des Brückenteils (13, 113) entspricht.

9. Vorrichtung (100, 200) nach Anspruch 8, wobei der zweite Reibungsbereich (132) ausgebildet ist, um einen Abstand von 5 mm oder mehr von dem Punkt des Abstreifers (130) beabstandet zu sein, der jedem der beiden Enden des Brückenteils (13, 113) entspricht.

10. Vorrichtung (100, 200) nach Anspruch 1, wobei der Reibungsbereich einen ersten Reibungsbereich (115) aufweist, der auf der unteren Form ausgebildet ist, und einen zweiten Reibungsbereich (132), der auf dem Abstreifer (130) ausgebildet ist.

11. Vorrichtung (100, 200) nach Anspruch 10, wobei zwei Aufnahmenuten, d. h. eine linke Aufnahmenut (111) und eine rechte Aufnahmenut (112), in der unteren Form ausgebildet sind,
ein Brückenteil (13, 113), das eingerichtet ist, die zwei Aufnahmenuten miteinander zu verbinden, zwischen der linken Aufnahmenut (111) und der rechten Aufnahmenut (112) ausgebildet ist,
der erste Reibungsbereich (115) auf einem äußeren Bereich des Brückenteils (13, 113) ausgebildet ist, der ein Bereich ist, der außerhalb des Brückenteils (13, 113) auf der Basisfläche (114) angeordnet ist, und
der zweite Reibungsbereich (132) auf einem äußeren Bereich des Abstreifers (131) ausgebildet ist, der die Druckfläche des Abstreifers (130) ist, der dem äußeren Bereich des Brückenteils (13, 113) zugewandt ist, der der Bereich ist, der außerhalb des Brückenteils (13, 113) auf der Basisfläche (114) angeordnet ist.

12. Vorrichtung (100, 200) nach Anspruch 11, wobei der erste Reibungsbereich (115) ausgebildet ist, um einen vorbestimmten Abstand von jedem der beiden Enden des Brückenteils (13, 113) beabstandet zu sein, und
der zweite Reibungsbereich (132) ausgebildet ist, um einen vorbestimmten Abstand von einem Punkt des Abstreifers (130) beabstandet zu sein, der jedem der beiden Enden des Brückenteils (13, 113) entspricht.

13. Vorrichtung (100, 200) nach Anspruch 12, wobei der erste Reibungsbereich (115) ausgebildet ist, um einen Abstand von 5 mm oder mehr von jedem der beiden Enden des Brückenteils (13, 113) beabstandet zu sein, und
der zweite Reibungsbereich (132) ausgebildet ist, um einen Abstand von 5 mm oder mehr von dem Punkt des Abstreifers (130) beabstandet zu sein, der jedem der beiden Enden des Brückenteils (13, 113) entspricht.

## Revendications

1. Appareil (100, 200) pour la fabrication d'une poche (10) d'une batterie secondaire (1), l'appareil (100, 200) comprenant :
une matrice inférieure, dans laquelle une rainure de réception pour mouler une partie coupelle (11, 12) de la poche (10) est formée dans une surface de base (114), sur laquelle la poche (10) est disposée ;
un poinçon (150) inséré dans la rainure de réception de la matrice inférieure pour mouler la partie coupelle (11, 12) de la poche (10) ; et
un dispositif d'extraction (130) prévu pour presser une portion périphérique (14) de la poche (10), qui est disposé dans la périphérie d'une portion devant être moulée en partie coupelle (11, 12) de la poche (10) par le poinçon (150),
dans lequel le dispositif d'extraction (130) et la matrice inférieure sont configurés pour presser et agripper des portions supérieure et inférieure d'une portion périphérique (14) de la poche (10), respectivement, et
dans l'état où la portion périphérique (14) de la poche (10) est agrippée par le dispositif d'extraction (130) et la matrice inférieure, le poinçon (150) est configuré pour être inséré dans la rainure de réception pour mouler la partie coupelle (11, 12) de la poche (10),
**caractérisé en ce que**
une zone de frottement, qui est une zone ayant une rugosité superficielle plus grande que celle de la portion périphérique (14), est formée sur une surface de pression de la matrice inférieure ou du dispositif d'extraction (130), qui presse la portion périphérique (14) de la poche (10).

2. Appareil (100, 200) de la revendication 1, dans lequel la zone de frottement comprend une première zone de frottement (115) formée sur la matrice inférieure.

3. Appareil (100, 200) de la revendication 2, dans lequel deux rainures de réception, à savoir une rainure de réception gauche (111) et une rainure de réception droite (112) sont formées dans la matrice inférieure,
une partie formant pont (13, 113) qui raccorde les deux rainures de réception l'une à l'autre est formée entre la rainure de réception gauche (111) et la rainure de réception droite (112), et
la première zone de frottement (115) est formée sur une zone externe de la partie formant pont (13, 113) laquelle est une zone disposée à l'extérieur de la partie formant pont (13, 113) sur la surface de base (114).

4. Appareil (100, 200) de la revendication 3, dans lequel la première zone de frottement (115) est formée de façon à être espacée d'une distance prédéterminée par rapport à chacune des deux extrémités de la partie formant pont (13, 113).

5. Appareil (100, 200) de la revendication 4, dans lequel la première zone de frottement (115) est formée de façon à être espacée d'une distance de 5 mm ou plus par rapport à chacune des deux extrémités de la partie formant pont (13, 113).

6. Appareil (100, 200) de la revendication 1, dans lequel la zone de frottement comprend une deuxième zone de frottement (132) formée sur le dispositif d'extraction (130).

7. Appareil (100, 200) de la revendication 6, dans lequel deux rainures de réception, à savoir une rainure de réception gauche (111) et une rainure de réception droite (112) sont formées dans la matrice inférieure,
une partie formant pont (13, 113) configurée pour les deux rainures de réception l'une à l'autre est formée entre la rainure de réception gauche (111) et la rainure de réception droite (112), et
la deuxième zone de frottement (132) est formée sur une zone externe du dispositif d'extraction (131) qui est la surface de pression du dispositif d'extraction (130), qui fait face à une zone externe de la partie formant pont (13, 113) laquelle est une zone disposée à l'extérieur de la partie formant pont (13, 113) sur la surface de base (114).

8. Appareil (100, 200) de la revendication 7, dans lequel la deuxième zone de frottement (132) est formée de façon à être espacée d'une distance prédéterminée par rapport à un point du dispositif d'extraction (130), qui correspond à chacune des deux extrémités de la partie formant pont (13, 113).

9. Appareil (100, 200) de la revendication 8, dans lequel la deuxième zone de frottement (132) est formée de façon à être espacée d'une distance de 5 mm ou plus par rapport au point du dispositif d'extraction (130), qui correspond à chacune des deux extrémités de la partie formant pont (13, 113).

10. Appareil (100, 200) de la revendication 1, dans lequel la zone de frottement comprend une première zone de frottement (115) formée sur la matrice inférieure et une deuxième zone de frottement (132) formée sur le dispositif d'extraction (130).

11. Appareil (100, 200) de la revendication 10, dans lequel deux rainures de réception, à savoir une rainure de réception gauche (111) et une rainure de réception droite (112) sont formées dans la matrice inférieure,
une partie formant pont (13, 113) configurée pour les deux rainures de réception l'une à l'autre est formée entre la rainure de réception gauche (111) et la rainure de réception droite (112),
la première zone de frottement (115) est formée sur une zone externe de la partie formant pont (13, 113), laquelle est une zone disposée à l'extérieur de la partie formant pont (13, 113) sur la surface de base (114), et
la deuxième zone de frottement (132) est formée sur une zone externe du dispositif d'extraction (131) qui est la surface de pression du dispositif d'extraction (130), qui fait face à la zone externe de la partie formant pont (13, 113) laquelle est la zone disposée à l'extérieur de la partie formant pont (13, 113) sur la surface de base (114).

12. Appareil (100, 200) de la revendication 11, dans lequel la première zone de frottement (115) est formée de façon à être espacée d'une distance prédéterminée par rapport à chacune des deux extrémités de la partie formant pont (13, 113), et
la deuxième zone de frottement (132) est formée de façon à être espacée d'une distance prédéterminée par rapport à un point du dispositif d'extraction (130), qui correspond à chacune des deux extrémités de la partie formant pont (13, 113).

13. Appareil (100, 200) de la revendication 12, dans lequel la première zone de frottement (115) est formée de façon à être espacée d'une distance de 5 mm ou plus par rapport à chacune des deux extrémités de la partie formant pont (13, 113), et
la deuxième zone de frottement (132) est formée de façon à être espacée d'une distance de 5 mm ou plus par rapport au point du dispositif d'extraction (130), qui correspond à chacune des deux extrémités de la partie formant pont (13, 113).
